(19) Europäisches Patentamt / European Patent Office / Office européen des brevets

(11) **EP 2 122 955 B1**

(12) **EUROPEAN PATENT SPECIFICATION**

(45) Date of publication and mention
of the grant of the patent:
**30.03.2016 Bulletin 2016/13**

(21) Application number: **08702418.8**

(22) Date of filing: **14.01.2008**

(51) Int Cl.:
*H04L 27/26* (2006.01)      *H04L 27/00* (2006.01)

(86) International application number:
**PCT/IB2008/050118**

(87) International publication number:
**WO 2008/087581 (24.07.2008 Gazette 2008/30)**

(54) **IMPROVED FREQEUNCY ESTIMATION IN A DATA COMMUNICATION SYSTEM**

VERBESSERTE FREQUENZSCHÄTZUNG IN EINEM DATENKOMMUNIKATIONSSYSTEM

ESTIMATION AMÉLIORÉE DE FRÉQUENCE DANS UN SYSTÈME DE COMMUNICATION DE DONNÉES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **16.01.2007 US 885158 P**

(43) Date of publication of application:
**25.11.2009 Bulletin 2009/48**

(73) Proprietor: **Koninklijke Philips N.V.
5656 AE Eindhoven (NL)**

(72) Inventor: **BIRRU, Dagnachew
Briarcliff Manor, New York 10510-8001 (US)**

(74) Representative: **Kroeze, Johannes Antonius
Philips Intellectual Property & Standards
High Tech Campus 5
5656 AE Eindhoven (NL)**

(56) References cited:
**WO-A-97/39557      US-A1- 2006 165 128**

• **LUO WU ET AL: "Two-Step Frequency Estimation
Algorithm For PSAM Systems" IEEE
INTERNATIONAL CONFERENCE ON
COMMUNICATION TECHNOLOGY, 1 November
2006 (2006-11-01), pages 1-3, XP031071806 USA
ISBN: 978-1-4244-0800-9**
• **LO H ET AL: "A STUDY OF NON-UNIFORM PILOT
SPACING FOR PSAM" IEEE INTERNATIONAL
CONFERENCE ON COMMUNICATIONS, 18 June
2000 (2000-06-18), - 21 June 2000 (2000-06-21)
pages 322-325, XP001042963 NY, US ISBN:
978-0-7803-6284-0**
• **MIN DONG ET AL: "Optimal placement of training
for channel estimation and tracking" IEEE
MILITARY COMMUNICATIONS CONFERENCE
FOR NETWORK-CENTRIC OPERATIONS:
CREATING THE INFORMATION FORCE, vol. 2, 28
October 2001 (2001-10-28), - 30 October 2001
(2001-10-30) pages 1195-1199, XP010579191 NY,
US ISBN: 978-0-7803-7225-2**

**Description**

**BACKGROUND OF THE INVENTION**

**1. <u>Field of the Invention</u>**

The invention relates generally to the field of data communications and more particularly, but not exclusively, to a system and method of transmitting a data signal.

**2. <u>Description of the Related Art</u>**

Future high-speed wireless communication systems are expected to occur at higher frequencies, e.g., 60 Ghz. One of the challenges associated with such systems is relatively high frequency mismatch between transmitter and receiver. At 60 Ghz, this mismatch can be up to 2.4 MHz, using a commercially available crystal of 20 ppm error at both the transmitter and receiver. This mismatch is up to ten times higher than that of today's 5 GHz WLANS.
Conventional packet structures, such as those used for WLANs for high speed communications, do not provide an accurate estimation of frequency error. This is because conventional packet structures contain a preamble sequence only at the beginning of the data. While this structure leads to performance that is adequate at low frequencies, e.g., 5 Ghz as the expected frequency error will not exceed 200 KHz (40 ppm). However, using a similar structure will not lead to good performance for systems at high frequency, e.g., 60 GHz. In order to get good estimation accuracy with high-speed systems, very long preambles are required at the beginning of the packet. However, this results in a very inefficient system. A conventional method to improve performance is to insert preambles regularly with data. These repeated preambles can be used not only for the frequency error estimation but also for other purposes such as channel estimation updates. While this structure improves performance, it is not adequate for high-frequency applications, e.g., 60 Ghz. Moreover, the regularly inserted preambles increase overhead, thereby reducing channel efficiency.
A solution to this problem is known from the Patent Application US2006/165128 A1 which proposes to insert pilots into a data stream to be transmitted using an irregular pilot spacing insertion algorithm.
A need therefore exists for a frequency error estimation system and method having acceptable overhead for use at high frequencies.

SUMMARY OF THE INVENTION

Therefore, the present invention has been made in view of the above problems. Accordingly, the present invention provides a system and method for providing improved frequency error estimation in a data communication system. In accordance with the method of the invention, the pilot symbols are inserted into the sequence of data symbols at progressively lower repetition rates (i.e., progressively larger repetition time intervals). By transmitting the pilot symbols at an initial high repetition rate of transmission, a data receiver is able to make a coarse estimation of the frequency error. Thereafter, as the repetition rate is progressively lowered, finer estimates of the frequency error are obtained. The sequence of pilot symbols, transmitted in the manner described, are useful, not only for providing improved frequency error estimates, but also for providing improved channel estimation updates.
Various aspects and embodiments of the invention are described in further detail below.

**BRIEF DESCRIPTION OF THE DRAWINGS**

These and other objects, features and advantages of the invention will be apparent from a consideration of the following Detailed Description Of The Invention considered in conjunction with the drawing Figures, in which:

**FIG. 1** is a functional block diagram of one embodiment of a data transmitter;

**FIG. 2** is one embodiment of a packet structure that may be employed for data packets transmitted by a data transmitter;

**FIG. 3** is a functional block diagram of one embodiment of a portion of data receiver focusing on the frequency error estimation and correction portion;

**FIG. 4** is a more detailed block diagram of the Frequency Estimation block 308 of the data receiver of FIG. 3; and

**FIGS. 5** & **6** illustrate two different simulation results for three system configurations corresponding, respectively, a first and second prior art system configuration and a system configuration according to an embodiment of the invention.

**DETAILED DESCRIPTION OF THE PREFERRED EMBODIMENTS**

In the following discussion, numerous specific details are set forth to provide a thorough understanding of the present invention. However, those skilled in the art will appreciate that the present invention is defined and limited only by the scope of appended claims 1-10.

It should be understood that the elements shown in the FIGS. may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure.

All examples and conditional language recited herein are intended for pedagogical purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present invention is defined and limited by the scope of appended claims 1-10.

Overview

The invention has particular, but not exclusive, application, in reducing the relatively high frequency mismatch that occurs between a transmitter and receiver communicating at high frequencies, thereby improving frequency error estimates for high-speed communication. Beneficially, the improved frequency error estimates are realized at a reasonable overhead.

As is well known, a conventional way of estimating frequency error in wireless communication systems is through auto-correlation of the received data. For example, a transmitter transmits a signal s(t). After down conversion by an RF unit, excluding multipath, a received signal can then be represented by,

$$r(t) = s(t)e^{i(2\pi f_\Delta t + \alpha)} + n(t) \qquad\qquad \text{Eq. [1]}$$

Where $f_\Delta$ is the frequency error (i.e., mismatch of the transmitter and receiver oscillator), $\alpha$ is phase offset, and n(t) is additive noise.

A common method of estimating this frequency error $f_\Delta$ is by transmitting two identical sequences within a known time interval. At the receiver, a delayed-auto-correlation operation is performed to compute the frequency error as follows.

The discrete time equivalent computation of the frequency error estimation can be described by

$$f(n) = \sum_{m=1}^{N} r(nT - mT)r^{*}(nT - mT - KT)$$

Eq. [2]

where T is the sampling rate and KT is the repetition interval of the sequence and N is the length of the sequence. Here, it is assumed that the integration is done only on the repeatedly transmitted part only. As a result, the following is found at the point that the repeated portions overlap.

$$f(n) = \delta e^{i2\pi f_{\Delta} KT} + n'(n)$$

Eq. [3]

where $\delta$ is a constant. Taking the angle of the above, one obtains the frequency error as

$$f^{1}{}_{\Delta} = f_{\Delta} + \frac{n''}{2\pi KT}$$

Eq. [4]

Where n" is a noise term. It should be noted from equation (4) that the accuracy of the frequency error is heavily influenced by the noise term and the interval KT. The noise term is more or less constant. One method of reducing the negative effect the noise term is to increase the interval KT. However, this interval cannot be increased without causing other adverse effects. For the above estimation to work, the expected angular rotation should not exceed 360° so that unambiguous estimation can be performed, i.e., $f_{\Delta}KT \leq 1$. In order to fulfill this constraint, it is necessary to have $KT$ less than the inverse of the frequency error ,i.e.,

$$KT < 1/f_{\Delta}$$

Eq. [5]

Thus, $KT$ needs to be dimensioned for the maximum expected error. In practice, it should be much smaller that the inverse of the expected frequency error. For example, for an ultra-wide-band (UWB) application, KT=300ns. In theory, this allows estimation of up to a 3.3MHz clock offset. However, the accuracy of the estimation depends on noise, which calls for larger KT values.

It is therefore shown that two conflicting requirements exist. More particularly, the repetition interval KT must be small to allow for the estimation of a large frequency error and the repetition interval KT must be large to obtain an accurate estimation error.

The conflicting requirements described above may be overcome for systems operating at frequencies at relatively low speeds, e.g., 5 GHz or lower, by setting the maximum tolerable frequency error to a certain value, such as 200 KHz. By limiting the maximum tolerable frequency error in this way, a suitable value of KT may be found. Accordingly, crystal oscillators with 20 ppm specification may be used, which are available at low cost.

Unfortunately, for communication systems operating at high speeds, e.g., on the order of 60GHz, the conflicting requirements are not easily met. For such high speed communication systems, on the order of 60 GHz, , the use of a 20 ppm crystal results in an unacceptable frequency error of 2.4MHz. This does not lend itself to find a suitable value of KT that is appropriate for both accuracy and larger magnitude estimation. One possible solution is to use a crystal oscillator with a 2 ppm specification. This requirement, however, is undesirable from a cost perspective.

The invention addresses the problem of finding a suitable value of KT that is appropriate for both accuracy and larger magnitude estimation by providing a system and associated method that provides improved frequency error estimates for high-speed communication systems (e.g., 60 GHz) at a reasonable overhead. An exemplary embodiment is described as follows.

**Transmitter**

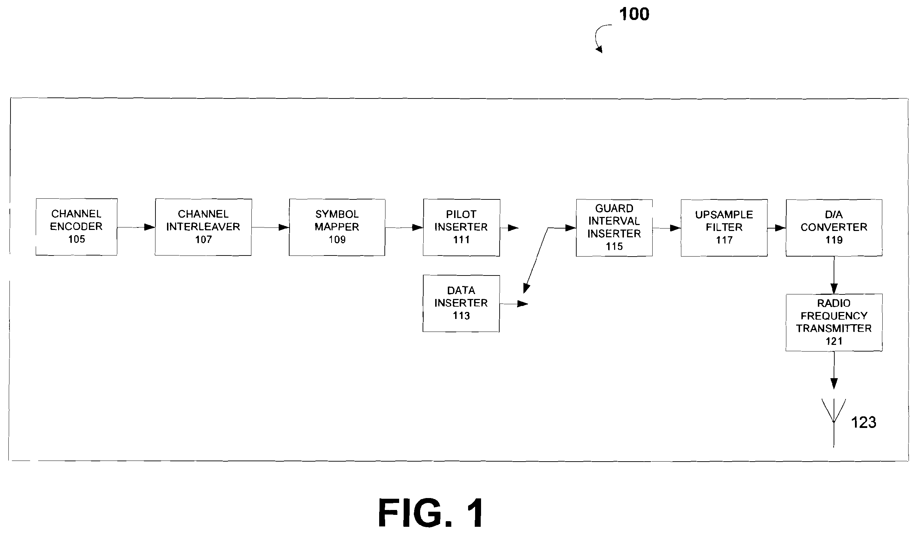

**FIG. 1** is a functional block diagram of one embodiment of a data transmitter 100. As will be appreciated by those skilled in the art, the various functions shown in **FIG. 1** may be physically implemented using a software-controlled microprocessor, hard-wired logic circuits, or a combination thereof. Also, while the functional blocks are illustrated as being segregated in **FIG. 1** for explanation purposes, they may be combined in any physical implementation.

Data transmitter 100 includes a channel encoder 105, a channel interleaver 107, a symbol mapper 109, a pilot inserter 111, a data insertion module 113, a guard interval inserter 115, an upsample filter 117, and a digital-to-analog converter 119.

Channel encoder 105 channel-encodes an input information bit sequence according to a coding method. The channel encoder 105 can be a block encoder, a convolutional encoder, a turbo encoder, or some combination thereof including a concatenated code.

Channel interleaver 107 interleaves the coded data according to an interleaving method. While not shown in FIG. 1, it is clear that a rate matcher including a repeater and a puncturer can reside between the channel encoder 105 and the channel interleaver 107.

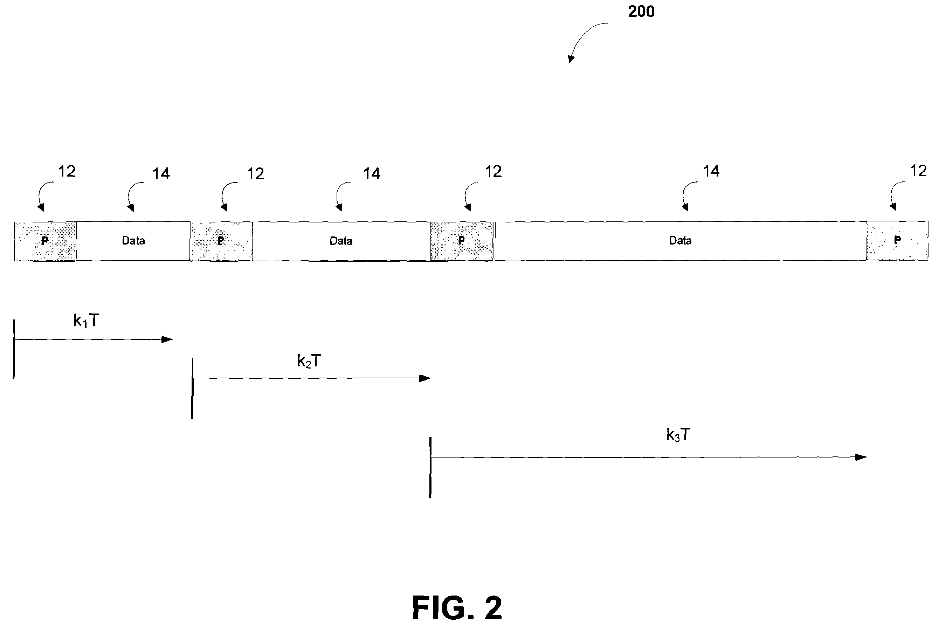

The data symbols output from the channel interleaver 107 are sent to a pilot inserter 111, where pilot symbols are inserted among the data symbols. The pilot inserter 111 generates pilot symbols which may be used to facilitate receiver detection of the transmitted signal. A more detailed description of the pilot symbols is discussed further below with reference to **FIG. 2.** Collectively, the data symbols and pilot symbols are referred to hereinafter simply as symbols. The symbols are passed to a guard interval inserter 115 to add prefixes to the symbols. The signals are then passed through an upsample filter 117, a digital-to-analog converter 121 and a radio frequency (RF) transmitter 121 which transmits SBCT symbols as a signal through a first transmitting antenna 123.

Guard interval inserter 113 includes a demultiplexer or switch 112 for selectively providing symbols output from the pilot inserter 111 or other data symbols, for example, from a training sequence.

## Packet Structure

**FIG. 2** is one embodiment of a structure of a data packet 200 that may be employed in the data transmitter according to one embodiment of the present invention. The data packet structure 200 is obtained by inserting short pre-amble packets 12, in a data stream to form discrete data sequences 14 separated by the pre-amble packets 12. The pre-amble packets are referred to hereafter as symbols 12. In accordance with the method of the invention, the symbols 12 are inserted into the data stream 14 at increasingly larger values of $K_N T$ (where N = 1, 2, 3, ...), where $K_N T$ is the repetition interval (i.e., time insertion interval) of the sequence of symbols 12.

Data transmitter 100 transmits the symbols 12 at a variable repetition interval KT suitable for use with a conventional 20 ppm crystal. By transmitting the symbols 12 at a variable repetition interval KT, smaller values of KT allow a receiver 300 to obtain an estimation of a coarse frequency error. The coarse estimation is sufficient to allow a receiver 300 to perform initial correction (de-rotate) of a received signal. As the spacing of the transmitted symbols 12 becomes increasingly larger, by using larger values of KT, the frequency estimation error becomes correspondingly smaller and smaller. Once a required accuracy is achieved, transmission of the symbol sequence 12 can be stopped. Alternatively, once a required accuracy is achieved, transmission of the symbol sequence 12 can continue using larger values of KT.

## Receiver

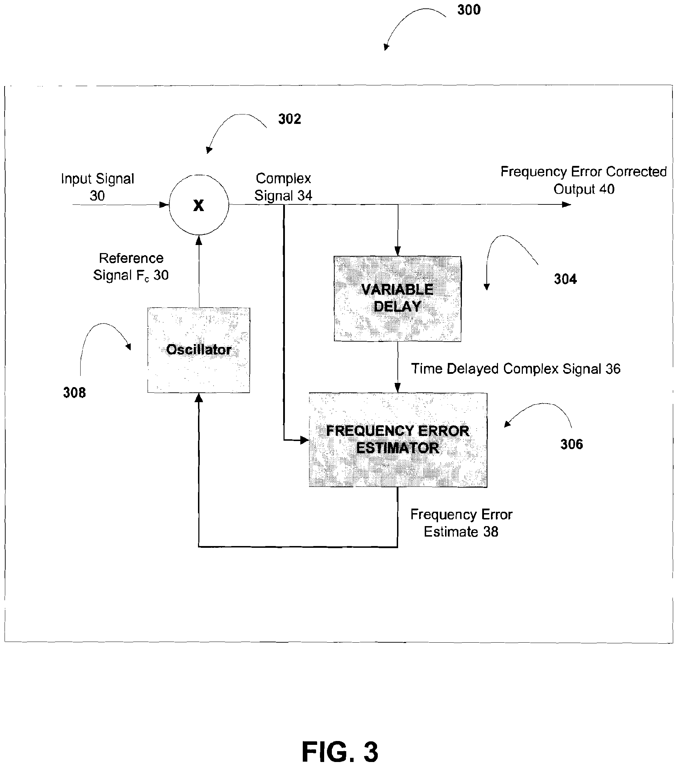

Turning now to **FIG. 3,** there is depicted a simplified exemplary embodiment of a data receiver 300. In the embodiment of **FIG. 3,** the data receiver 400 includes a complex mixer 302, a variable delay block 304, a frequency error estimation block 306 and a local oscillator 308.

In operation, an input radio signal 30, which is wirelessly received from radio transmitter 121 (see Fig. 1), is supplied as a first input to the complex mixer 302 where it is combined with a reference signal 32, output from oscillator 308, having a characteristic frequency $f_c$ equal to the carrier frequency. A resulting complex signal 34 is processed by variable delay block 304 which is configured to delay the complex signal 34 by a known delay time to produce a time delayed complex signal 36. The time delayed complex signal 36 is supplied as one input to the frequency estimator block 306. The complex signal 34 is supplied as a second input to the frequency estimator block 306. Frequency error estimation block 308 is configured to determine the frequency characteristics of the frequency reference signal 32 and output a frequency error estimate 38 to the oscillator 308.

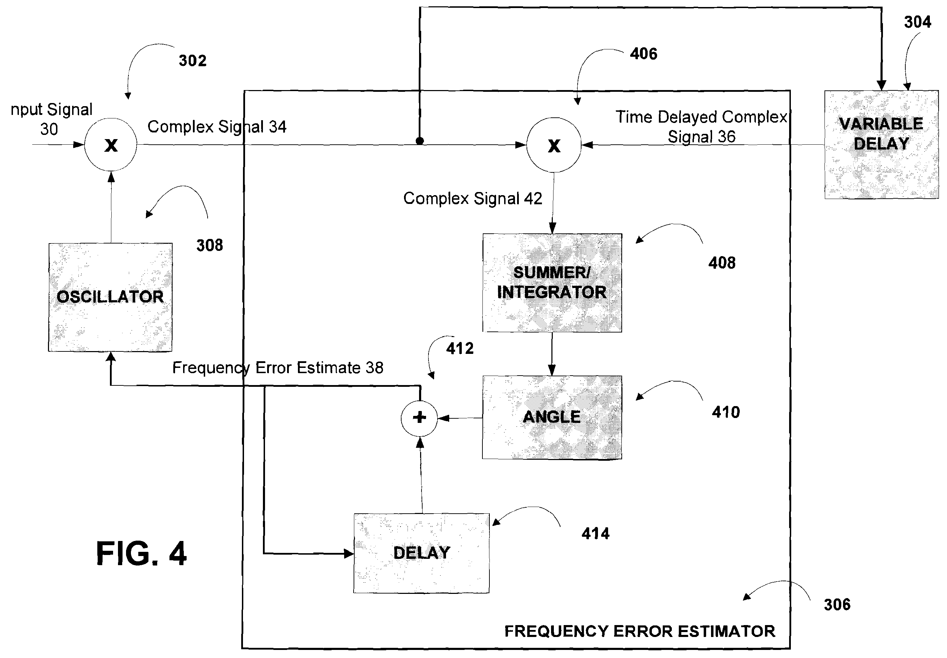

Turning now to **FIG. 4,** there is shown a more detailed block diagram of Frequency Estimation block 306. Frequency estimation block 306 is comprised of complex mixer 406, summer/integrator 408, angle estimator 410, an adder 412 and delay block 414. Complex mixer 406 and summer 408 perform a delayed auto-correlation operation on the two inputs. Specifically, frequency estimation block 306 receives two inputs, a first input, i.e., complex signal 34, which is output from complex mixer 302 and a second input, i.e., time delayed complex signal 36, output from variable delay block 304. The two inputs are combined in complex mixer 406 and produce a complex signal output 42 which is provided as an input to the summer block 408. These two operations collectively perform the delayed-auto-correlation operation described above with reference to Fig. 2, re-written here as Equation [6]. The complex mixer performs the multiplication portion of equation [6] and the summer/integrator block 408 performs the summing portion of equation [6].

$$f(n) = \sum_{m=1}^{N} r(nT - mT) r^*(nT - mT - KT)$$

Eq. [6]

The output of summing block 410 is then provided as an input to the angle estimation block 410 which calculates the angle of $f(n)$. This is described above as equation [4], rewritten here as equation [7].

$$f^1{}_\Delta = f_\Delta + \frac{n''}{2\pi KT}$$

Eq. [7]

The angle estimate is provided as one input to the adder 412. The adder 412 receives a second input from delay block 414. Delay block 414 comprises the single element of a first order feedback loop and is configured to add previously computed frequency error estimates to the current frequency error estimate 38. The delay block provides a delayed frequency error estimate output to the adder 412 every .e.g., TN seconds, where T is the sample period in seconds and N is the integration interval, as shown in equations [2] and [6]. Beneficially, by adding previously computed frequency error estimates to a currently computed frequency error estimate, the noise can be averaged out, thus providing a more accurate frequency error estimate.

**Experimental Results**

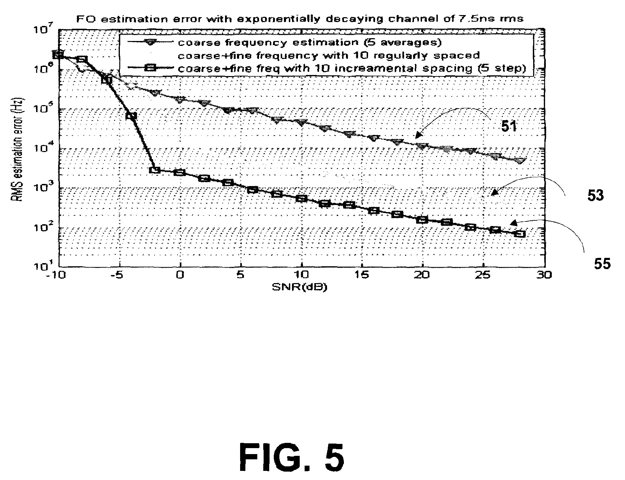

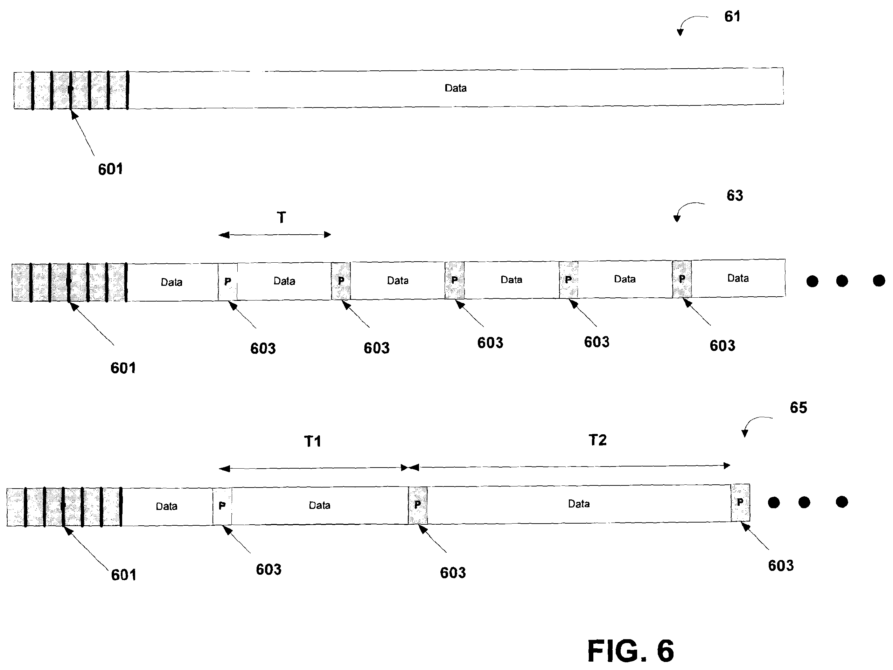

**FIGS. 5** & **6** illustrate simulation results for three system configurations **(FIG. 5)** and corresponding data packet structures used in each of the respective three system configurations **(FIG. 6).** More particularly, **FIG. 5** illustrates simulation results (curves 51 & 53) for two prior art system configurations, shown as simulation output curves 51 and 53 and a single simulation result, shown as output curve 55, for a system configuration according to an embodiment of the invention.

The three simulations were performed in accordance with the following parameters, which comprise typical parameters for a high-speed communication system operating at 60 GHz. A sampling rate of 1.4 GHz, a frequency offset of 2.4 MKHz (= 40ppm error at 60GHz), and a random exponentially decaying channel with 7.5 ns delay spread.

Referring now to **FIG. 6,** there is shown respective data packet structures 61, 63 and 65 that were used in each of the respective three system configurations. The first data packet structure 61 was used in the baseline prior art system configuration. As shown, this data packet structure 61 includes 6 preamble sequences 601 that are inserted at the beginning of the first transmitted data packet to facilitate coarse frequency estimation at a receiver.

**FIG. 6** further illustrates a second data packet structure 63, according to the prior art, which is included as a refinement of the baseline prior art system configuration. The second data packet structure 63 includes the 6 preamble sequences 601 of the baseline packet structure 61 and further includes 10 additional preamble packets 603, (five of which are shown), spaced at a regular interval, "T", throughout the data packet structure 63 to provide a finer frequency estimation at a data receiver.

With continued reference to **FIG. 6,** there is also shown a third data packet structure 65, employed by the data transmitter according to the invention. This third data packet structure includes the 6 preamble sequences 601, as shown in packet structures 61, 63 and further includes 10 preamble packets 603 that are inserted at a progressively increased spacing (e.g., T1, T2, etc..), according to principles of the invention. Recall that the novel method of progressively spacing preamble packets was described in detail above with respect to **FIG. 2.** It is noted that the third data packet structure 63 produces a simulation result 55 that is superior to the prior art packet structures 61, 63 by as much as 10 dB.

Although embodiments which incorporate the teachings of the present disclosure have been shown and described in detail herein. The present invention is defined and limited only by the scope of appended claims 1-10.

**Claims**

1. A method for providing improved frequency estimation in a data communication system, the method comprising the steps of:

   a) performing encoding, interleaving and symbol mapping on original information bits to form a data stream of modulated information symbols;
   b) inserting pilot symbols with a high initial repetition rate of transmission and at progressively longer time intervals into the data stream to form a radio signal; and
c) transmitting the radio signal from a data transmitter to a receiver.

2. A method according to claim 1, further comprising the steps of:

receiving the radio signal at said receiver; and
performing frequency error estimation using the received pilot symbols at the receiver.

3. A method according to claim 2, wherein the step of performing frequency error estimation using the received pilot symbols at the receiver, further comprises the steps of:

obtaining a coarse estimate of frequency error at the receiver using initially transmitted pilot symbols inserted into the data stream; and
obtaining finer estimates of said frequency error at the receiver using further transmitted pilot symbols inserted at said progressively longer time intervals in the data stream.

4. A method according to claim 3, further comprising the steps of:

determining when a required frequency error estimation accuracy is achieved at the receiver; and
halting the insertion of further pilot symbols into the transmitted data stream.

5. A method according to claim 3, further comprising:

determining when a required frequency error estimation accuracy is achieved at the receiver; and
adjusting the insertion rate of further pilot symbols into the transmitted data stream.

6. A method according to claim 5, wherein said insertion rate is adjusted downward when said required frequency error estimation accuracy is achieved.

7. A method according to claim 1, wherein said step (a) of inserting pilot symbols into the data stream, further comprises:

inserting the pilot symbols into the data stream at an initial repetition interval of $K_1 T$, where T is a sampling rate of symbols in said data stream and $K_1$ is a positive integer; and
inserting pilot symbols at a progressively increased repetition interval $K_N T$, where $K_N$ comprises a sequence of positive integers greater than $K_1$.

8. A method according to claim 7, wherein pilot symbols are inserted into said data stream at said initial repetition interval $K_1 T$ that is lower than the inverse of a maximum expected frequency error at the receiver.

9. A data transmitter comprising:

means for performing encoding, interleaving and symbol mapping on original information bits to form a data stream of modulated information symbols;
means for inserting pilot symbols with a high initial repetition rate and at a progressively longer time intervals into the data stream to form a radio signal; and
means for transmitting the radio signal from the data transmitter to a receiver.

10. A data communication system, comprising the data transmitter of claim 9 and a receiver comprising means for receiving the radio signal transmitted by the data transmitter.

**Patentansprüche**

1. Verfahren zum Vorsehen verbesserter Frequenzschätzung in einem Datenkommunikationssystem, wobei das Verfahren die folgenden Schritte umfasst, wonach:

a) Codierung, Interleaving und Symbolzuordnung auf ursprünglichen Informationsbits durchgeführt werden, um einen Datenstrom von modulierten Informationssymbolen zu erzeugen;

b) Pilotsymbole mit einer hohen anfänglichen Übertragungswiederholrate und bei progressiv längeren Zeitintervallen in den Datenstrom eingefügt werden, um ein Funksignal zu erzeugen; und

c) das Funksignal von einem Datensender zu einem Empfänger übertragen wird.

2. Verfahren nach Anspruch 1, das weiterhin die folgenden Schritte umfasst, wonach:

das Funksignal an dem Empfänger empfangen wird; und
eine Frequenzfehlerschätzung unter Verwendung der empfangenen Pilotsymbole an dem Empfänger vorgenommen wird.

3. Verfahren nach Anspruch 2, wobei der Schritt des Durchführens einer Frequenzfehlerschätzung unter Verwendung der empfangenen Pilotsymbole an dem Empfänger weiterhin die folgenden Schritte umfasst, wonach:

eine grobe Frequenzfehlerschätzung an dem Empfänger unter Verwendung von anfänglich übertragenen, in den Datenstrom eingefügten Pilotsymbolen erhalten wird; und
feinere Frequenzfehlerschätzungen an dem Empfänger unter Verwendung von weiteren übertragenen, bei progressiv längeren Zeitintervallen in den Datenstrom eingefügten Pilotsymbolen erhalten werden.

4. Verfahren nach Anspruch 3, das weiterhin die folgenden Schritte umfasst, wonach:

festgestellt wird, wenn eine erforderliche Frequenzfehlerschätzungsgenauigkeit an dem Empfänger erreicht wird; und
das Einfügen weiterer Pilotsymbole in den übertragenen Datenstrom gestoppt wird.

5. Verfahren nach Anspruch 3, wonach weiterhin:

festgestellt wird, wenn eine erforderliche Frequenzfehlerschätzungsgenauigkeit an dem Empfänger erreicht wird; und
die Einfügungsrate weiterer Pilotsymbole in den übertragenen Datenstrom angepasst wird.

6. Verfahren nach Anspruch 5, wobei die Einfügungsrate nach unten angepasst wird, wenn die erforderliche Frequenzfehlerschätzungsgenauigkeit erreicht ist.

7. Verfahren nach Anspruch 1, wobei der Schritt (a) des Einfügens von Pilotsymbolen in den Datenstrom weiterhin umfasst:

Einfügen der Pilotsymbole in den Datenstrom bei einem anfänglichen Wiederholungsintervall von $K_1T$, wobei T eine Abtastrate von Symbolen in dem Datenstrom darstellt und $K_1$ eine positive ganze Zahl darstellt; und
Einfügen von Pilotsymbolen bei einem progressiv erhöhten Widerholungsintervall $K_NT$, wobei $K_N$ eine Sequenz von positiven ganzen Zahlen größer als $K_1$ umfasst.

8. Verfahren nach Anspruch 7, wobei Pilotsymbole in den Datenstrom bei dem anfänglichen Wiederholungsintervall $K_1T$ eingefügt werden, das geringer als das Inverse eines maximal erwarteten Frequenzfehlers an dem Empfänger ist.

9. Datensender, umfassend:

Mittel zur Durchführung von Codierung, Interleaving und Symbolzuordnung auf ursprünglichen Informationsbits, um einen Datenstrom von modulierten Informationssymbolen zu erzeugen;
Mittel zum Einfügen von Pilotsymbolen mit einer hohen anfänglichen Wiederholrate und bei progressiv längeren Zeitintervallen in den Datenstrom, um ein Funksig-nal zu erzeugen; sowie
Mittel zur Übertragung des Funksignals von dem Datensender zu einem Empfänger.

10. Datenkommunikationssystem, das den Datensender nach Anspruch 9 sowie einen Empfänger mit Mitteln zum Empfangen des von dem Datensender übertragenen Funksignals umfasst.

**Revendications**

1. Procédé pour fournir une estimation de fréquence améliorée dans un système de communication de données, le procédé comprenant les étapes de :

    a) la réalisation d'un encodage, d'un entrelacement et d'un mappage de symbole sur des bits d'informations d'origine pour former un flux de données de symboles d'informations modulés ;
    b) l'insertion de symboles pilotes avec un taux de répétition initial élevé de transmission et à des intervalles temporels progressivement plus longs dans le flux de données pour former un signal radio ; et
    c) la transmission du signal radio d'un transmetteur de données à un récepteur.

2. Procédé selon la revendication 1, comprenant en outre les étapes de :

    la réception du signal radio dans ledit récepteur ; et
    la réalisation d'estimation d'erreur de fréquence en utilisant les symboles pilotes reçus dans le récepteur.

3. Procédé selon la revendication 2, dans lequel l'étape de la réalisation d'estimation d'erreur de fréquence en utilisant les symboles pilotes reçus dans le récepteur comprend en outre les étapes de :

    l'obtention d'une estimation grossière d'erreur de fréquence dans le récepteur en utilisant des symboles pilotes initialement transmis insérés dans le flux de données ; et
    l'obtention d'estimations plus précises de ladite erreur de fréquence dans le récepteur en utilisant des symboles pilotes transmis supplémentaires insérés auxdits intervalles temporels progressivement plus longs dans le flux de données.

4. Procédé selon la revendication 3, comprenant en outre les étapes de :

    la détermination de l'instant auquel une précision requise d'estimation d'erreur de fréquence est atteinte dans le récepteur ; et
    l'arrêt de l'insertion de symboles pilotes supplémentaires dans le flux de données transmis.

5. Procédé selon la revendication 3, comprenant en outre :

    la détermination de l'instant auquel une précision requise d'estimation d'erreur de fréquence est atteinte dans le récepteur ; et
    l'ajustement du taux d'insertion de symboles pilotes supplémentaires dans le flux de données transmis.

6. Procédé selon la revendication 5, dans lequel ledit taux d'insertion est ajusté vers le bas lorsque ladite précision requise d'estimation d'erreur de fréquence est atteinte.

7. Procédé selon la revendication 1, dans lequel ladite étape (a) de l'insertion de symboles pilotes dans le flux de données comprend en outre :

    l'insertion des symboles pilotes dans le flux de données à un intervalle de répétition initial de $K_1T$, où T est un taux d'échantillonnage de symboles dans ledit flux de données et $K_1$ est un nombre entier relatif positif ; et
    l'insertion de symboles pilotes à un intervalle de répétition progressivement augmenté $K_NT$, où $K_N$ comprend une séquence de nombres entiers relatifs positifs supérieurs à $K_1$.

8. Procédé selon la revendication 7, dans lequel des symboles pilotes sont insérés dans ledit flux de données audit intervalle de répétition initial $K_1T$ qui est inférieur à l'inverse d'une erreur de fréquence prévue maximum dans le récepteur.

9. Transmetteur de données, comprenant :

    des moyens pour réaliser un encodage, un entrelacement et un mappage de symbole sur des bits d'informations d'origine pour former un flux de données de symboles d'informations modulés ;
    des moyens pour insérer des symboles pilotes avec un taux de répétition initial élevé et à des intervalles temporels progressivement plus longs dans le flux de données pour former un signal radio ; et

des moyens pour transmettre le signal radio du transmetteur de données à un récepteur.

10. Système de communication de données, comprenant le transmetteur de données selon la revendication 9 et un récepteur comprenant des moyens pour recevoir le signal radio transmis par le transmetteur de données.

100

| CHANNEL ENCODER 105 | → | CHANNEL INTERLEAVER 107 | → | SYMBOL MAPPER 109 | → | PILOT INSERTER 111 | → |

| GUARD INTERVAL INSERTER 115 | → | UPSAMPLE FILTER 117 | → | D/A CONVERTER 119 |

| DATA INSERTER 113 |

| RADIO FREQUENCY TRANSMITTER 121 |

123

# FIG. 1

FIG. 2

300

302

Input Signal
30

Complex
Signal 34

Frequency Error Corrected
Output 40

X

Reference
Signal F$_c$ 30

VARIABLE
DELAY

304

Oscillator

Time Delayed Complex Signal 36

308

FREQUENCY ERROR
ESTIMATOR

306

Frequency Error
Estimate 38

# FIG. 3

FIG. 4

EP 2 122 955 B1

FIG. 5

EP 2 122 955 B1

61

Data

601

63

T

Data | P | Data | P | Data | P | Data | P | Data | P | Data ● ● ●

603     603     603     603     603

601

65

T1          T2

Data | P | Data | P | Data | P ● ● ●

601     603     603     603

## FIG. 6

**EP 2 122 955 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006165128 A1